# EUROPÄISCHE PATENTSCHRIFT

(11) **EP 0 685 364 B1**
(45) Veröffentlichungstag und Bekanntmachung des Hinweises auf die Patenterteilung: **02.04.1997**
(21) Anmeldenummer: 95107428.5
(22) Anmeldetag: 16.05.1995
(51) Int. Cl.: B60R 21/20

(54) **Gassack-Schutzvorrichtung**
Airbag
Dispositif de protection à sac gonflable

(30) Priorität: 31.05.1994 DE 9408908 U
(43) Veröffentlichungstag der Anmeldung: 06.12.1995
(73) Patentinhaber: TRW Occupant Restraint Systems GmbH, 73553 Alfdorf (DE)
(72) Erfinder: Acker, Dominique, D-73553 Alfdorf (DE); Herpich, Thomas, D-73066 Uhingen-Sparwiesen (DE); Maier, Gunter, D-73072 Donzdorf-Winzingen (DE); Stütz, Michael, D-73565 Spraitbach (DE)
(74) Vertreter: Degwert, Hartmut, Dipl.-Phys.

(56) Entgegenhaltungen:
- EP-A- 0 422 840
- WO-A-93/11972
- DE-A- 2 016 761
- DE-A- 2 251 493
- US-A- 3 582 107
- US-A- 4 286 954
- US-A- 4 332 398

## Beschreibung

Die Erfindung betrifft eine Gassack-Schutzvorrichtung nach dem Oberbegriff des Anspruchs 1.

Eine derartige Gassack-Schutzvorrichtung ist aus der US-A-4 286 954 bekannt. Obwohl Gassack-Schutzvorrichtungen in Sekundenbruchteilen aufgeblasen sind, kann die Aufblaszeit für bestimmte Anwendungsfälle, beispielsweise für Gassäcke im Seitenbereich des Fahrzeugs, zu lang sein. Ein schnelles Aufblasen eines Gassacks darf dabei nicht die Gefahr der Zerstörung des Gassacks durch aus dem Gasgenerator austretende heiße Gase mit sich führen. Die US-A-4 286 954 sieht zur Vermeidung dieser Gefahr vor, daß der Gasgenerator von einem rohrförmigen Diffusor gleichmäßig umgeben ist, wobei der Diffusor und der Gasgenerator innerhalb des Gassacks angeordnet sind. Der Diffusor sorgt für eine optimale Verteilung der aus dem Gasgenerator austretenden Gase, wodurch das Aufblasen des Gassacks beschleunigt wird. Aufgrund der relativ kleinen Öffnungen in der Mantelfläche des Diffusors ergeben sich jedoch zu starke Strömungsverluste, die den Aufblasvorgang trotz der besseren Verteilung der Gase verzögern.

Aufgabe der Erfindung ist es, eine Gassack-Schutzvorrichtung der eingangs angegebenen Art zu schaffen, die schneller aufblasbar ist, ohne daß dabei die Gefahr einer Zerstörung des Gassacks auftritt.

Die Aufgabe wird erfindungsgemäß durch die Merkmale des Anspruchs 1 gelöst. Durch das Vorsehen eines in Umfangsrichtung geschlossenen Mittelabschnitts sowie jeweils eines sich axial daran anschließenden, in Umfangsrichtung offenen Endabschnitts ergibt sich eine besonders günstige Strömungsverteilung, so daß Gas innerhalb des Diffusors zu den offenen Endabschnitten geleitet wird und dort rasch ausströmen kann.

Das Vorsehen eines Gehäuseteils der Gassack-Schutzvorrichtung, an welchem die Einheit aus Gassack, Diffusor und Gasgenerator anbringbar ist, ermöglicht die kompakte Anordnung dieser Elemente innerhalb des Gehäuseteils und gestattet damit die Herstellung vormontierter Einheiten.

Vorzugsweise bilden das Gehäuseteil und der Diffusor eine Einspannvorrichtung zum Einspannen eines Abschnitts des Gassacks, der dessen Einführöffnung für Diffusor und Gasgenerator berandet.

Eine besonders günstige Strömungsverteilung wird dadurch erreicht, daß sich die Endabschnitte ausgehend vom Mittelabschnitt erweitern.

Zusätzlich ist gemäß einer bevorzugten Ausführungsform vorgesehen, daß der Mittelabschnitt des Diffusors mit einer Mehrzahl von Ausströmöffnungen versehen ist, die zum Gassackinnenraum gerichtet sind, so daß eine noch gleichmäßigere Verteilung des aus dem Gasgenerator austretenden Gases erzielt wird.

Bei der bevorzugten Ausführungsform sind ferner die Ausblasöffnungen des Gasgenerators gegen einen Bereich des Mittelabschnitts des Diffusors gerichtet, der selbst keine Ausströmöffnungen aufweist, so daß der unmittelbar am Gasaustritt des Gasgenerators auftretende hohe Druck von der Wandung des Diffusors aufgefangen wird und daß die Gefahr einer Beschädigung des Gassacks erheblich reduziert ist. Außerdem kann die hohe Temperatur der aus dem Gasgenerator austretenden Gase an der Wandung des Diffusors weniger Schaden anrichten, als wenn diese Gase unmittelbar auf den Gassack treffen würden.

Eine besonders vorteilhafte Ausführungsform besteht darin, daß zumindest in dem Umfangsbereich, in dem die Ausblasöffnungen des Gasgenerators sowie die Ausströmöffnungen des Mittelabschnitts des Diffusors gelegen sind, ein radialer Abstand zwischen der Außenumfangsfläche des Gasgenerators und der Innenumfangsfläche des Diffusors vorgesehen ist, so daß dort ein im Querschnitt teilringförmiger Hohlraum gebildet ist, der eine Fluidverbindung zwischen den Ausblasöffnungen des Gasgenerators und den Ausströmöffnungen des Mittelabschnitts sowie den Endabschnitten des Diffusors schafft. Hierdurch wird auf einfache Weise zwischen dem Gasgenerator und dem diesen umgebenden Diffusor ein Kanal geschaffen, in dem die aus dem Gasgenerator austretenden Gase zu den Ausströmöffnungen sowie zu den Endabschnitten fließen können.

Weitere Merkmale und Vorteile der Erfindung ergeben sich aus der folgenden Beschreibung einer Ausführungsform der Erfindung und aus der Zeichnung, auf die Bezug genommen wird. In der Zeichnung zeigen:
Fig. 1 eine schematische Skizze mehrerer möglicher Anbringungsorte der Gassack-Schutzvorrichtung,
Fig. 2 eine teilweise geschnittene Seitenansicht einer erfindungsgemäßen Gassack-Schutzvorrichtung,
Fig. 3 eine geschnittene Querschnittsansicht einer Gassack-Schutzvorrichtung in Richtung des Pfeiles III-III in Fig. 2,
Fig. 4 eine Draufsicht auf den Diffusor in Richtung des Pfeiles IV in Fig. 2, und
Fig. 5 eine Explosionszeichnung einer erfindungsgemäßen Gassack-Schutzvorrichtung.

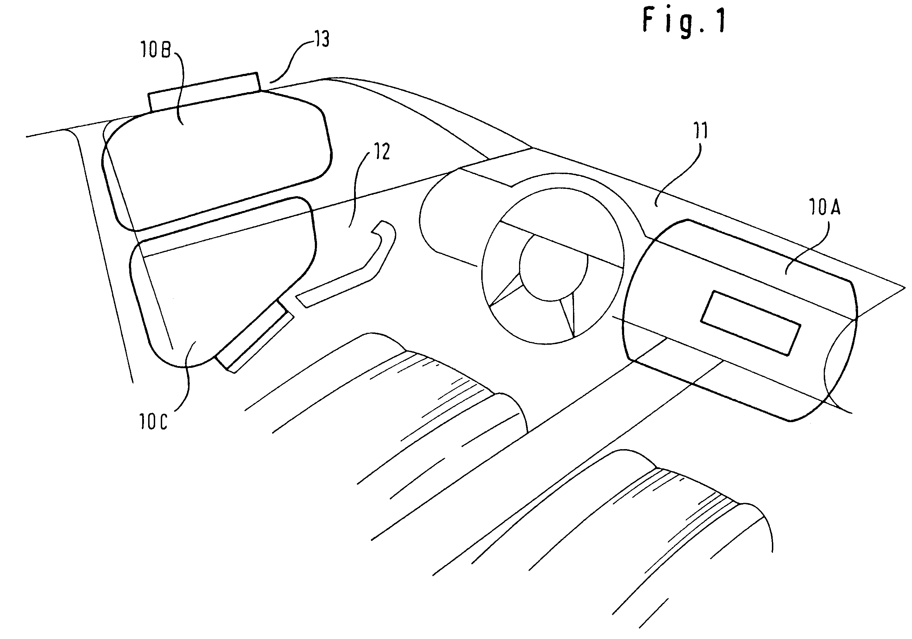

Fig. 1 zeigt schematisch den vorderen Teil des Innenraums einer Fahrzeugkabine mit unterschiedlichen Anbringungsmöglichkeiten der erfindungsgemäßen Gassack-Schutzvorrichtung. Dort ist eine erste Gassack-Schutzvorrichtung 10A gezeigt, die in einem Armaturenbrett 11 des Fahrzeugs auf der Beifahrerseite angebracht ist. Eine zweite Gassack-Schutzvorrichtung 10B ist oberhalb der Tür in der Dachverkleidung 13 des Fahrzeugs montiert und entfaltet sich nach unten, so daß der aufgeblasene Airbag einen Schutz zwischen dem Kopf eines Insassen und dem Türseitenfenster bietet. Eine weitere Gassack-Schutzvorrichtung 10C ist in der Türinnenverkleidung 12 angebracht und entfaltet sich nach oben, so daß der aufgeblasene Gassack einen Schutz zwischen dem seitlichen Brustbereich eines Insassen und der Tür bildet.

Insbesondere die Anbringung der Gassack-Schutzvorrichtung 10B und 10C im Türbereich erfordern ein extrem schnelles Aufblasen des Gassacks, da bei einer Seitenkollision die Zeitspanne zwischen einer ersten, vom Sensor feststellbaren Fahrzeugberührung bis zu einer für den Insassen gefährlichen Fahrzeugverformung und dem damit einhergehenden Auftreffen des Insassen auf die Innenseite der Fahrzeugtür sehr kurz ist. Obwohl die seitlichen Gassack-Schutzvorrichtungen 10B und 10C in Fig. 1 in Verbindung mit der Fahrertür gezeigt sind, lassen diese ebenso an der Beifahrertür oder im hinteren Seitenbereich der Fahrzeugkabine anbringen.

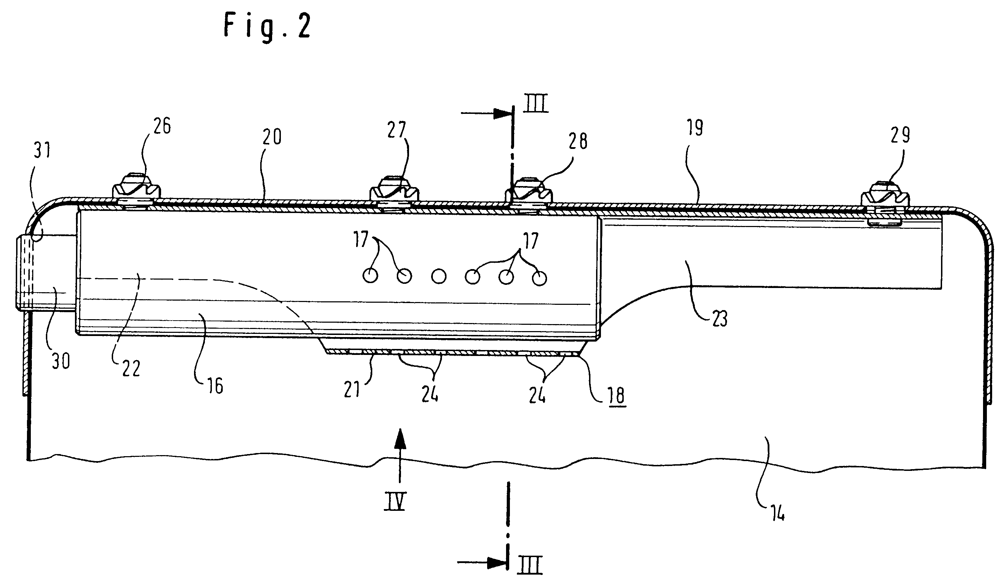

In Fig. 2 ist eine erfindungsgemäße Gassack-Schutzvorrichtung im montierten Zustand gezeigt. Ein rohrförmiger Gasgenerator 16 ist innerhalb eines Diffusors 18 angeordnet, der in Fig. 2 geschnitten dargestellt ist. Der Gasgenerator 16 und der Diffusor 18 sind über bekannte Schraubverbindungen 26, 27, 28 mit einem halbschalenförmig ausgestalteten Gehäuseteil 19 fest verbunden, wobei zwischen dem Gehäuseteil 19 und dem Diffusor 18 ein Abschnitt 20 eines Gassacks 14 eingespannt ist. Dabei sind der Diffusor 18 und der Gasgenerator 16 innerhalb des Gassacks 14 angeordnet, wobei ein Ansatzteil 30 des Gasgenerators durch eine Öffnung 31 im Gassack 14 nach außen tritt. Der Gassack 14 umgibt das Ansatzstück 30 im Bereich der Öffnung 31 im wesentlichen abdichtend. Eine weitere Schraube 29 verbindet den Diffusor 18 mit dem Gehäuseteil 19 unter Einspannung des Abschnitts 20 des Gassacks 14 in einem vom Gasgenerator 16 abgewandten Bereich.

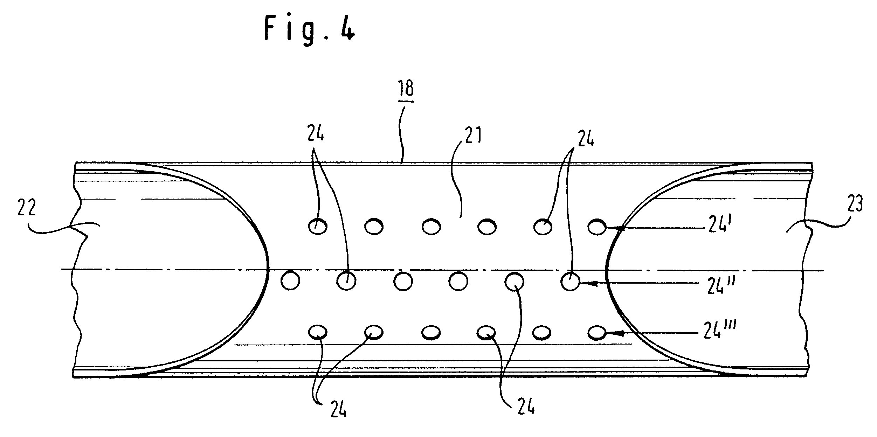

Der Diffusor 18 ist ebenso wie der Gasgenerator 16 rohrförmig ausgebildet. Der Diffusor 18 weist einen im wesentlichen ringförmig geschlossenen Mittelabschnitt 21 auf, der mit einer Mehrzahl von Ausströmöffnungen 24 versehen ist, welche zum Innenraum des Gassacks 14 gerichtet sind. Die sich axial an den geschlossenen Mittelabschnitt 21 anschließenden Endabschnitte 22, 23 des Diffusors 18 besitzen einen teilringförmigen Querschnitt mit einem zum Innenraum des Gassacks 14 weisenden Ausschnitt, der sich von dem Mittelabschnitt 21 ausgehend zu den Enden erweitert und dort etwa den halben Umfang einnimmt, wie in Fig. 4 zu sehen ist. Der jeweilige Übergang zwischen den offenen Endabschnitten 22, 23 und dem geschlossenen Mittelabschnitt 21 erfolgt im wesentlichen fließend ohne Ausbildung von Stufen, wie in Fig. 2 und auch in Fig. 4 zu sehen ist. Die axialen Stirnseiten des rohrförmigen Diffusors 18 sind offen, so daß aus dem Gasgenerator 16 austretendes Gas nicht nur radial sondern auch axial aus dem Diffusor ausströmen kann.

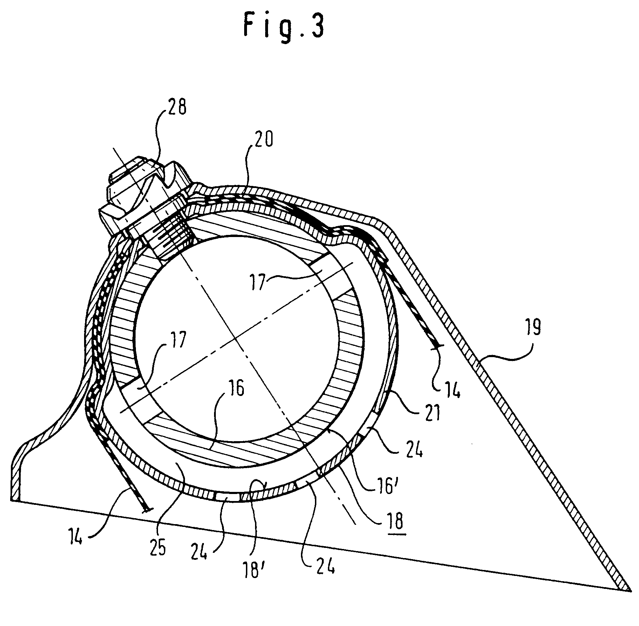

Wie aus Fig. 2 und insbesondere aus Fig. 3 zu sehen ist, ist der Gasgenerator 16 mit Ausblasöffnungen 17 versehen, die auf zwei zueinander entgegengesetzt gerichteten Seiten in jeweils einer achsparallelen Reihe angeordnet sind.

Die Reihen der Ausblasöffnungen 17 sind jeweils im Winkel von ca. 90° zur Mittelachse der die beim Aufblasen des Gassacks austretende Zugkraft abstützenden Schraubverbindungen 26, 27, 28 und 29 angeordnet. Die Ausblasöffnungen 17 münden dabei in einen teilringförmigen Hohlraum 25, der zwischen der Außenumfangsfläche 16' des Gasgenerators 16 und der Innenumfangsfläche 18' des Diffusors 18 gebildet ist. Der teilringförmige Hohlraum 25 erstreckt sich über etwas mehr als die Hälfte des Umfangs des Gasgenerators und ist durch eine partielle Durchmesservergrößerung des Diffusors 18 im Mittelabschnitt 21 gebildet, wie in Fig. 3 zu sehen ist. Der teilringförmige Hohlraum 25 ist dabei auf der von den Schraubverbindungen 27 und 28 abgewandten Seite des Gasgenerators 16 gelegen und bildet auf diese Weise eine Fluidverbindung zwischen den Ausblasöffnungen 17 des Gasgenerators 16 und den Ausströmöffnungen 24 im Mittelabschnitt 21 sowie den Endabschnitten 22 und 23 des Diffusors 18.

Auf der von den Schraubverbindungen 27 und 28 abgewandt gelegenen Seite des Mittelabschnitts 21 sind Ausströmöffnungen 24 im Mittelabschnitt 21 vorgesehen, die zum Innenraum des Gassacks 14 hin gerichtet sind. Die Ausströmöffnungen 24 sind in mehreren Reihen 24', 24'', 24''' angeordnet, wobei die Ausströmöffnungen jeder Reihe in Axialrichtung voneinander beabstandet angeordnet sind. Die Reihen 24', 24'', 24''' von Ausströmöffnungen 24 sind jeweils in einer Axialebene angeordnet, wobei die Axialebenen in Umfangsrichtung voneinander beabstandet sind. Ein bevorzugter Abstand der Reihen in Umfangsrichtung liegt zwischen 25° und 35°, bevorzugt 30°. Die Axialebenen der Reihen von Ausströmöffnungen 24 sind umfangsmäßig zu den durch die Ausblasöffnungen 17 des Gasgenerators 16 gehenden Axialebenen beabstandet, so daß aus den Ausblasöffnungen 17 austretendes Gas nicht unmittelbar durch Ausströmöffnungen 24 austreten kann, sondern zunächst gegen die Wandung des Mittelbereichs 21 gerichtet wird und somit durch den teilringförmigen Hohlraum 25 zu den Ausströmöffnungen 24 sowie den Endabschnitten 22 und 23 geleitet wird. Hierdurch wird mit Sicherheit vermieden, daß heißes Gas unter hohem Druck direkt auf den Gassack 14 auftrifft und diesen dadurch beschädigt.

Zur optimalen Verteilung des aus den Ausströmöffnungen 24 austretenden Gases zeigt Fig. 4 eine Anordnung, bei welcher die Ausströmöffnungen 24 zweier in Umfangsrichtung benachbarter Reihen 24', 24'' von Ausströmöffnungen 24 relativ zueinander axial voneinander beabstandet sind. Hierdurch wird eine radial und axial versetzte Anordnung der Ausströmöffnungen 24 und damit eine gleichmäßigere Ausströmcharakteristik erreicht.

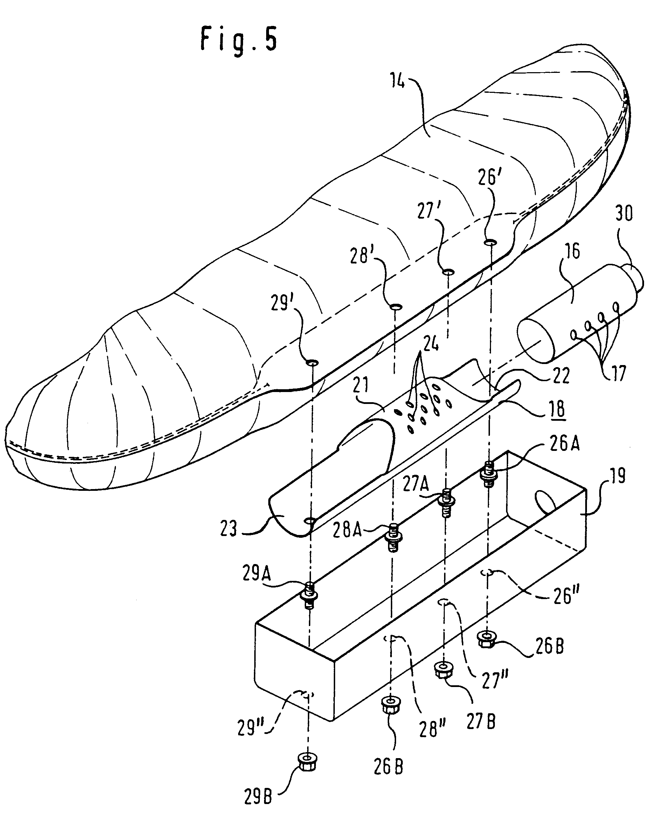

In Fig. 5 ist die gesamte Gassack-Schutzvorrichtung in einer Explosionszeichnung dargestellt, und anhand dieser Explosionszeichnung wird die Montage der Vorrichtung beschrieben. Zunächst wird der rohrförmige Gasgenerator 16 in den Diffusor 18 soweit eingeführt, daß die Ausblasöffnungen 17 des Gasgenerators 16 gegen die Wandung des Diffusors 18 in dessen Mittelbereich 21 gerichtet sind. Dann werden die Befestigungsschrauben 26A, 27A, 28A, 29A in der Anordnung aus Diffusor 18 und Gasgenerator 16 fixiert. Diese Anordnung wird dann durch eine Einführöffnung des Gassacks, die durch den Abschnitt 20 berandet ist, in den Gassack 14 eingeführt und dort so plaziert, daß die Befestigungsschrauben 26A, 27A, 28A, 29A durch entsprechende Löcher 26', 27', 28', 29' dem verstärkten Abschnitt 20 des Gassacks 14 nach außen hindurchgeführt sind. Dann wird diese Anordnung zusammen mit dem Gassack 14 in das halbschalenförmig ausgebildete Gehäuseteil 19 eingesetzt, wobei die Befestigungsschrauben 26A, 27A, 28A, 29A entsprechende Löcher 26'', 27'', 28'', 29'' im Gehäuseteil 19 durchgreifen, woraufhin jeweils eine Mutter 26B, 27B, 28B, 29B auf die zugeordnete Befestigungsschraube geschraubt und festgezogen wird, wodurch der Gassack 14 mit seinem verstärkten Abschnitt 20 zwischen dem Diffusor 18 und dem Gehäuse 19 eingeklemmt wird.

Ein Zünden des Gasgenerators 16 bewirkt, daß das entstehende Gas aus den Ausblasöffnungen 17 des Gasgenerators in den teilringförmigen Hohlraum 25 einströmt und dort zu den Ausströmöffnungen 24 sowie zu den Endabschnitten 22, 23 des Diffusors geleitet wird. Das Gas strömt dadurch entlang nahezu der gesamten axialen Länge des Diffusors 18 im wesentlichen gleichmäßig in den Gassack 14 ein, so daß dieser gleichmäßig und schnell über seine gesamte Länge aufgeblasen wird. Lokale Gasstromspitzen werden dabei im Gassack vermieden, so daß das Auftreten von Turbulenzen im Gassack im wesentlichen reduziert ist, was zu einem schnellen und gleichmäßigen Aufblasen des Gassacks ebenfalls beiträgt. Auf diese Weise können auch Gassacks mit einer großen Längserstreckung, wie sie beispielsweise im Fahrzeugseitenbereich erforderlich sind, schnell aufgeblasen werden.

Außerdem kann durch eine gezielte Anordnung der Ausströmöffnungen der Gasstrom in eine bestimmte Richtung gelenkt werden, wodurch die Gassackentfaltung beeinflußt werden kann.

## Patentansprüche

1. Gassack-Schutzvorrichtung, für einen Fahrzeuginsassen, mit einem aufblasbaren Gassack, einem mit Ausblasöffnungen versehenen Gasgenerator, der innerhalb eines rohrförmig ausgebildeten Diffusors (18) gelegen ist, welcher mehrere Ausströmöffnungen zur Verteilung der Gasströmung aufweist, wobei der Gasgenerator (16) und der Diffusor (18) innerhalb des Gassacks (14) angeordnet sind, dadurch gekennzeichnet, daß der rohrförmige Diffusor (18) einen in Umfangsrichtung geschlossenen Mittelabschnitt (21) sowie jeweils einen sich axial daran anschließenden, in Umfangsrichtung offenen Endabschnitt (22, 23) aufweist.

2. Gassack-Schutzvorrichtung nach Anspruch 1, dadurch gekennzeichnet, daß ein Gehäuseteil (19) der Gassack-Schutzvorrichtung vorgesehen ist, an welchem die Einheit aus Gassack (14), Diffusor (18) und Gasgenerator (16) anbringbar ist.

3. Gassack-Schutzvorrichtung nach Anspruch 2, dadurch gekennzeichnet, daß das Gehäuseteil (19) und der Diffusor (18) eine Einspannvorrichtung zum Einspannen eines eine Einführöffnung berandenden Abschnitts (20) des Gassacks (14) bilden.

4. Gassack-Schutzvorrichtung nach einem der vorstehenden Ansprüche, dadurch gekennzeichnet, daß zumindest der Mittelabschnitt (21) des Diffusors (18) mit einer Mehrzahl von Ausströmöffnungen (24) versehen ist, die zum Luftsackinnenraum gerichtet sind.

5. Gassack-Schutzvorrichtung nach Anspruch 4, dadurch gekennzeichnet, daß die Ausströmöffnungen (24) in mehreren Reihen (24', 24'', 24''') angeordnet sind, die jeweils in einer Axialebene liegen, wobei die Axialebenen in Umfangsrichtung voneinander beabstandet sind.

6. Gassack-Schutzvorrichtung nach einem der vorstehenden Ansprüche, dadurch gekennzeichnet, daß die Endabschnitte (22, 23) jeweils einen Ausschnitt aufweisen, der sich von dem Mittelabschnitt (21) ausgehend erweitert und an den axialen Enden etwa den halben Umfang einnimmt.

7. Gassack-Schutzvorrichtung nach einem der vorhergehenden Ansprüche, dadurch gekennzeichnet, daß die Ausblasöffnungen (17) des Gasgenerators (16) gegen einen Bereich des Mittelabschnitts (21) des Diffusors (18) gerichtet sind, der selbst keine Ausströmöffnungen aufweist.

8. Gassack-Schutzvorrichtung nach einem der vorhergehenden Ansprüche, dadurch gekennzeichnet, daß zumindest in dem Umfangsbereich, in dem die Ausblasöffnungen (17) des Gasgenerators (16) sowie die Ausströmöffnungen (24) des Mittelabschnitts (21) des Diffusors (18) gelegen sind, ein radialer Abstand zwischen der Außenumfangsfläche (16') des Gasgenerators (16) und der Innenumfangsfläche (18') des Diffusors (18) vorgesehen ist, so daß dort ein im Querschnitt teilringförmiger Hohlraum (25) gebildet ist, der eine Fluidverteilung zwischen den Ausblasöffnungen (17) des Gasgenerators (16) und den Ausströmöffnungen (24) des Mittelabschnitts (21) sowie den Endabschnitten (22, 23) des Diffusors (18) schafft.

## Claims

1. A gas bag protective device for a vehicle occcupant, comprising an inflatable gas bag, a gas generator provided with outlet openings and placed within a tubular-shaped diffusor (18) which comprises a plurality of discharge openings for distribution of the gas flow, the gas generator (16) and the diffusor (18) being disposed within the gas bag (14), characterized in that the tubular-shaped diffusor (18) has a central section (21) which is closed in the peripheral direction, and a respective end section (22, 23) axially adjoining the central section, said end sections (22, 23) being open in the peripheral direction.

2. The gas bag protective device as claimed in claim 1, characterized by a housing part (19) of the gas bag protective device, the unit consisting of the gas bag (14), the diffusor (18) and the gas generator (16) being mountable to said housing part.

3. The gas bag protective device as claimed in claim 2, characterized in that the housing part (19) and the diffusor (18) constitute a clamping device for clamping a section (20) of the gas bag (14), this section bordering an insertion opening.

4. The gas bag protective device as claimed in any one of the preceding claims, characterized in that at least the central section (21) of the diffusor (18) is provided with a plurality of discharge openings (24) which are directed towards the internal space of the gas bag.

5. The gas bag protective device as claimed in claim 4, characterized in that the discharge openings (24) are arranged in a plurality of rows (24', 24'', 24'''), each of which being arranged in one axial plane, said planes being spaced apart in the peripheral direction.

6. The gas bag protective device as claimed in any one of the preceding claims, characterized in that the end sections (22, 23) each comprise a cutout which starting at the central section (21) widens and which at the axial ends extends along approximately half the circumference.

7. The gas bag protective device as claimed in any one of the preceding claims, characterized in that the outlet openings (17) of the gas generator (16) are directed towards a part of the central section (21) of the diffusor (18), said part itself having no discharge openings.

8. The gas bag protective device as claimed in any one of the preceding claims, characterized in that at least in the peripheral part in which the outlet openings (17) of the gas generator (16) and the discharge openings (24) of the central section (21) of the diffusor (18) are placed, a radial clearance is provided between the external peripheral surface (16') of the gas generator (16) and the inner peripheral surface (18') of the diffusor (18) so that here a cavity (25) is formed which is part-annular in cross section and which constitutes a fluid distribution between the outlet openings (17) of the gas generator (16), the discharge openings (24) of the central section (21) and the end sections (22, 23) of the diffusor (18).

## Revendications

1. Dispositif de protection à sac de gaz, pour un passager de véhicule, comportant un sac de gaz gonflable, un générateur de gaz pourvu d'orifices de gonflage, oui est mis à l'intérieur d'un diffuseur (18) constitué en forme de tube et qui présente plusieurs orifices de sortie pour répartir l'écoulement du gaz, le générateur de gaz (16) et le diffuseur (18) étant disposés à l'intérieur du sac de gaz (14)
caractérisé en ce que
le diffuseur de forme tubulaire (18) présente une section centrale (21), fermée dans le sens périphérique, et respectivement une section terminale (22, 23), ouverte dans le sens périphérique, se raccordant axialement à la précédente.

2. Dispositif de protection à sac de gaz selon la revendication 1, caractérisé en ce qu'il est prévu une partie de boîtier (19) du dispositif de protection à sac de gaz, sur laquelle on peut monter l'ensemble se composant du sac de gaz (14), du diffuseur (18) et du générateur de gaz (16).

3. Dispositif de protection à sac de gaz, selon la revendication 2, caractérisé en ce que la partie de boîtier (19) et le diffuseur (18) forment un dispositif de serrage pour serrer une section (20) du sac de gaz (14), section qui borde un orifice d'introduction.

4. Dispositif de protection à sac de gaz selon l'une des revendications précédentes, caractérisé en ce qu'au moins la section centrale (21) du diffuseur (18) est pourvue d'une multiplicité d'orifices de sortie (24), qui sont orientés en direction de la chambre intérieure du sac d'air.

5. Dispositif de protection à sac de gaz, selon la revendication 4, caractérisé en ce que les orifices de sortie (24) sont diposés sur plusieurs rangées (24',24'', 24''') qui se trouvent respectivement dans un plan axial, les plans axiaux étant espacés les un des autres dans le sens périphérique.

6. Dispositif de protection à sac de gaz selon l'une des revendications précédentes, caractérisé en ce que les sections terminales (22, 23) présentent respectivement une entaille, qui va en s'élargissant en partant de la section centrale (21) et occupe aux extrémités axiales à peu près la moitié du pourtour.

7. Dispositif de protection à sac de gaz selon l'une des revendications précédentes, caractérisé en ce que les orifices de gonflage (17) du générateur de gaz (16) sont orientés vers une zone de la section centrale (21) du diffuseur (18), qui ne présente pas elle-même d'orifices de sortie.

8. Dispositif de protection à sac de gaz selon l'une des revendications précédentes, caractérisé en ce que l'on prévoit au moins dans la zone périphérique, dans laquelle sont mis les orifices de gonflage (17) du générateur de gaz (16) ainsi que les orifices de sortie (24) de la section centrale (21) du diffuseur (18), une distance radiale entre la surface périphérique extérieure (16') du générateur de gaz (16) et la surface périphérique intérieure (18') du diffuseur (18), de telle sorte que l'on y forme un espace creux (25) qui a la forme partielle d'un anneau en section transversale, espace qui crée une répartition du fluide entre les orifices de gonflage (17) du générateur de gaz (16) et les orifices de sortie (24) de la section centrale (21) et les sections terminales (22, 23) du diffuseur (18).
